# EUROPEAN PATENT APPLICATION

(11) **EP 3 144 864 A1**
(43) Date of publication of application: **22.03.2017**
(21) Application number: 15199354.0
(22) Date of filing: 10.12.2015
(51) Int. Cl.: G06Q 10/08

(54) **GPS SHIPPING AND TEMPERATURE SENSOR LABEL**

(30) Priority: 17.09.2015 US 201514856606
(71) Applicant: Barton, James D., Miami Beach, Florida 33139 (US)
(72) Inventor: Barton, James D., Miami Beach, Florida 33139 (US)
(74) Representative: Romano, Giuseppe

(57) **Abstract**

A system for locating and tracking of packages is disclosed. The system for tracking packages comprises an attached RFID/GPS label housing a GPS barcode which allows businesses to track packages utilizing longitude and latitude technology. In use, the barcode/shipping label is activated by a wafer like, flexible, printable battery label by entering the GPS barcode into a software program. The RFID is imbedded on the back of the label such that when the GPS barcode is activated the package can be tracked. Additionally, a smart app is provided for tracking and identifying the location of the package, providing an exact address of the package's location and to monitor the temperature of their goods and an alert will be sent to the shipper and consignee once the temperature breaches the desired set temperature. Customers with this new concept can now see their shipments move in real-time based on its final destination.

## Description

### FIELD OF INVENTION

The present invention relates to a system for locating and tracking of packages real-time, and monitor temperature sensitive goods. More particularly, it relates to a comprehensive, efficient, and highly automated, GPS-voice assisted navigation, computerized tracking system that is particularly useful for accurate real-time tracking of packages and monitoring of temperature sensitive packaging.

### BACKGROUND OF INVENTION

Several trends in today's society have combined to produce a need for rapid and dependable delivery of parcels, perishables or packages (the terms being used interchangeably herein). These trends include the consolidation of parts warehouses for economic reasons, just-in-time manufacturing methods, consumer empowerment which includes internet shopping and the ever-growing need for rapid gratification. These trends have resulted in the establishment and growth of several business concerns whose service is parcel and package delivery by various means including air, rail, and ground, with promised transit times inversely related to fees.

Business and personal consumers have become dependent on these services, as exemplified by just-in-time manufacturing. Businesses can suffer serious disruption in the event of a lost or delayed shipment. Consumers become anxious or angry when shipments are lost or don't arrive as promised or expected. In order to resolve those concerns in an efficacious manner, shipping companies have come to provide tracking services. As practiced prior to this invention, each time a package is handled, a package tracking number or other identifying information (the "package identifier") and the location, time, and date are recorded in a database, often after capture by means of a bar code scanner or other automated method. The term package identifier as used herein includes instances where such an identifier may, in fact, refer to more than one package. Some shipping systems allow more than one package to be shipped under a single tracking number, or identifier. In such instances, the packages would be bound for the same destination and would, therefore, travel together from origin location to destination location. In this way, the single package identifier could be used to track the location of the multiple packages shipped together. In such instances, the packages would be bound and bundled for the same destination and each package would require a GPS tracking label therefore, travel together from origin location to destination location, this is known as shrink wrap delivery, in some cases the shrink wrap breaks away from bundle and does not mean the packages will arrive together at the same location. In this way, the single GPS package identifier on each package will be used to track each package and know the location of the multiple packages shipped together.

The sender or recipient of a package can utilize the identifier assigned to the package to query the delivery company's database via e-mail inquiry, web browser or other method to find out its current status and whereabouts. If a package is not delivered when expected, the shipping company can use the information in the database to begin looking for it at the point where it was last scanned. Where the multiple packages were shipped under a single identifier, the group of packages could be tracked in the same way using the identifier if a package comes apart from the multiple shipment there is no current way to link the shipment to the multiple shipment, as if does not have a shipping label.

The movement of objects and persons occurs continuously but is hardly quantified. Rather, typically only the result of the movement is known. Advances in technology have provided some quantification of movement. For example, GPS products now assist in determining the location of golf carts, vehicles and persons. However, the detail of movement, minute to minute, second to second, is still not generally determinable in the prior art. The exact movements of such objects, and the conditions that they are subjected to, from point to point, are only qualitatively known. Accordingly, a need remains for the systems and methods addressing the afore-mentioned difficulties while providing a system to track packages via GPS barcode with longitude and latitude technology with voice assisted navigation/RFID NFC/Wi-Fi technology and in this respect, the present invention substantially fulfills this need.

As such, it may be appreciated that there continues to be a need for a new and improved system and method to track packages as set forth by the instant invention which addresses the problems of ease of use as well as effectiveness in construction in providing the system and method to track packages via GPS barcode with longitude and latitude technology and in this respect, the present invention substantially fulfills this need.

### BRIEF SUMMARY OF THE INVENTION

A system for locating and tracking of packages is disclosed. The system for tracking packages real-time comprises an attached RFID label housing a GPS barcode which allows businesses to track packages utilizing longitude and latitude technology. In use, the GPS/barcode label is activated by entering the GPS/barcode into a software program. The GPS barcode is imbedded on the back of the RFID label such that when the GPS barcode is activated by a wafer like, flexible, printable battery label and attached to a package, letters and perishables, wherein the package, letters and perishables can be tracked. Additionally, a smart app is provided for tracking and identifying the location of the package, letters and perishables, providing an exact address of the package's location. With the ability to track using data track, the movement of items in real-time going from its origin to its destination, including the ability to monitor temperature sensitive goods. Once a delivery is done a banner/ txt message will be sent to the consumer alerting them the delivery has been complete.

Accordingly, it is a primary aspect of the present invention to track the location of packages via GPS barcode labels applied onto the packages for connecting the tracking labels to the barcode with navigation information, using GPS latitude and longitude technology and uses a smart temperature sensor label/ probe to indicate the low, mid and high point temperature of the product being shipped that is temperature sensitive and applied onto the merchandise inside the box.

It is yet another aspect of the present invention to provide a mobile smartphone application designed for real time tracking of the packages utilizing voice navigation, and navigation information, using GPS latitude and longitude with RFID and Wi-Fi/NFC technology label. Icons are provided for where the packages are and/or type of delay due to weather conditions and the like.

In still another aspect of the present invention, the GPS barcode is embedded using a wafer like, flexible, printable battery label on a package that can be adjusted to fit any sized packages for convenience of use. Use of the GPS barcode will now give the consumer the ability to see their product in real-time tracking with voice navigation on their smart phone, tablet, computer or any electronic device to their final destination.

In still yet another aspect of the present invention, fingerprint technology will replace the current technology for signing for a package. Fingerprint technology will allow the consumer to sign for a package by scanning their fingerprint as proof of receipt, and the name of the consignee will be typed in by the deliverer.

### BRIEF DESCRIPTION OF THE DRAWINGS

To further clarify various aspects of some example embodiments of the present invention, a more particular description of the invention will be rendered by reference to specific embodiments thereof which are illustrated in the appended drawing. It is appreciated that the drawing depicts only illustrated embodiments of the invention and are therefore not to be considered limiting of its scope. The invention will be described and explained with additional specificity and detail through the use of the accompanying drawing in which:
**FIGURE 1** is a perspective view of a system for the package tracking technology including temperature sensing in accordance with the present invention.
**FIGURE 2** is a graphical view of a captured screenshot using the software application of the present invention for locating the exact location of the packages/letters and temperature sensitive packages.
**FIGURE 3** is graphical representation of various signs and symbols utilized for locating the location of the packages/letters and view temperature sensitive packages, to show why the consumer packages are delayed
**FIGURE 4** is a map view feature of the software application used for real time location tracking and temperature sensor monitoring of a package in accordance with the present invention.
**FIGURE 5** is a perspective view of the GPS barcode and smart temperature sensor label. This feature also shows the temperature sensor label.
**FIGURE 6** is perspective view of the GPS Shipping label barcode with an RFID and smart temperature sensor label.
**FIGURE 7** is another perspective of the GPS shipping label barcode with an RFID and smart temperature sensor label printed on the Tyvek paper or same like waterproof paper.
**FIGURE 8** is another graphical view of a captured screenshot using the software application of the present invention for locating the exact location of the packages/letters and temperature sensitive packages.
**FIGURE 9** graphical representations of smart temperature sensor and probe options along with the label like barcode wherein the probes are imbedded for Celsius and Fahrenheit readings and the sensor label programmed for specific food categories.
**FIGURE 10** is a graphical figure of the fingerprint technology that will replace current technology for signing for a package. Fingerprint technology will allow the consumer to sign for a package by scanning their fingerprint as proof of receipt, and the name of the consignee will be typed in by the deliverer.
**FIGURE 11** is a graphical representation of the flexible, printable power source to be used to power on the real-time GPS Shipping label and Temperature sensor label, will be a smart sticker for time-sensitive perishables or medicines could be printed that might store low, med and high details of its temperature, Dangerous goods and freshness.

### DETAIL DESCRIPTION OF THE INVENTION

The present invention provides an object tracking and identification system. In one embodiment, the system includes a GPS barcode and RFID label housed within a durable enclosure using a wafer like, flexible, printable battery label like product that will attach onto packages, wherein the GPS barcode uses longitude and latitude technology and may incorporate a smart temperature sensor. A software application is provided that allows a user to log into any commercially available GPS/tracking system that uses longitude and latitude technology. A software application for package tracking is provided and may be installed and operated on computer devices such as mobile phones, laptops, desktops, tablets, and the likes. This Gives the consumer real-time tracking from origin to destination, latitude, longitude, altitude, speed and estimated time of arrival based on the service selected to its final destination.

In use, the GPS barcode with an RFID label on it, allows businesses to track packages with the GPS barcode label using longitude and latitude technology by entering the GPS shipping/barcode into the provided software that activates the GPS/barcode label for the software to track packages. The Shipping-Barcode will have a wafer like, printable battery on a flexible label adhered to the back of the shipping label. In accordance with the present invention when a package goes out for delivery, the consumer will have the capabilities to track the items, whereabouts at all times, if a consumer disputes a claim for not receiving the package, the technology helps the consumer to pinpoint the exact precision of the location of the package, providing a satisfactorily result.

The system for tracking packages may be used by placing the barcode on various items and not just packages to track and find the exact location using longitude and latitude technology. These items may include, but is not limited to, clothing/drycleaners, diamonds/jewelry, baggage/airline tickets, packages/cargo, furs/expensive handbags, rail-roads, moving companies/U-haul/penske and many more. Therefore in accordance with the present invention the GPS Shipping barcode is adjustable to fit any items/packages for the convenience of use.

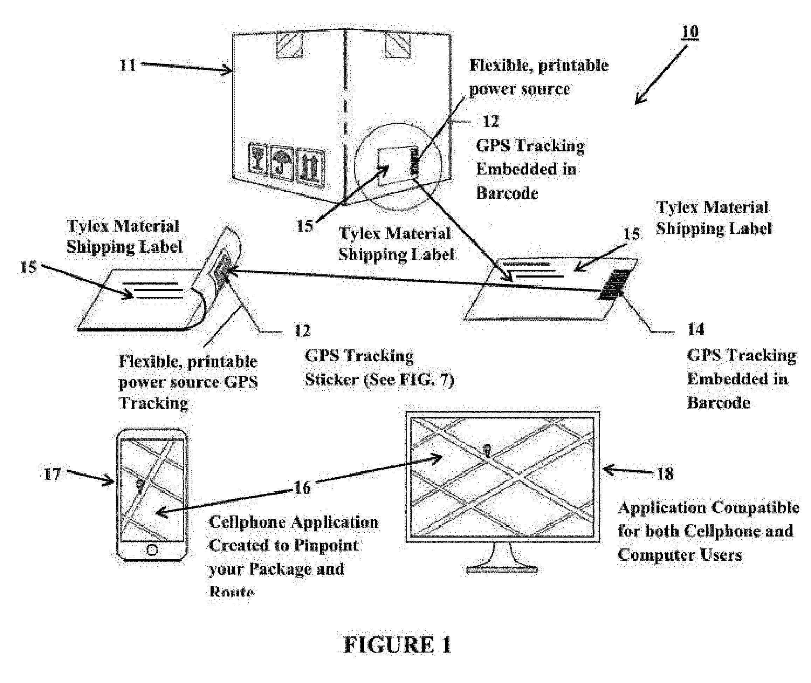

Referring now to **FIGURE 1****,** a system comprising a shipping label **15** for tracking packages according to this invention wherein a package **11** has attached onto it a GPS shipping barcode label and flexible, printable power source **12.** The GPS Shipping barcode **12** is embedded with an RFID label and flexible, printable power source **14,** protected within Tyvek paper **15.** The package **11** comprising the GPS barcode label **12** can be tracked at its precise location through a software application **16.** The software application **16,** herein, is shown in its map view on a smart phone **17** and on a desktop **18.** The software application **16** is compatible for all communicating devices, such as phones, laptops, computers, tablets, or any electronic device.

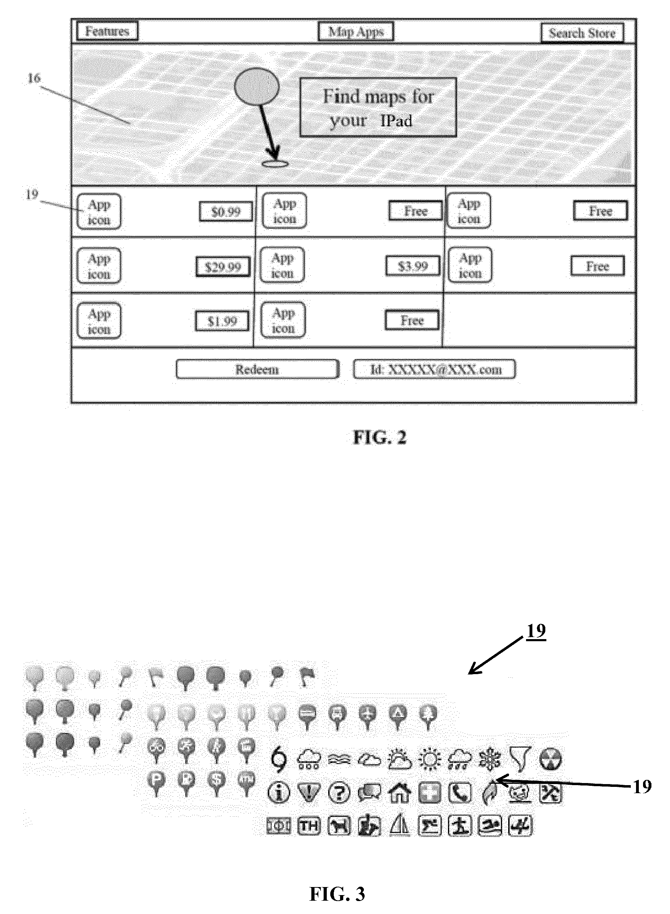

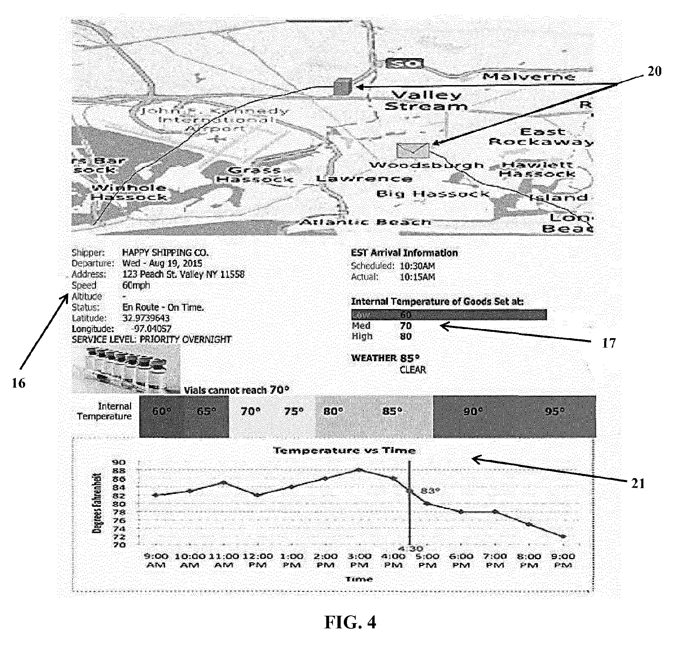

Referring now to **FIGURE 2****,** the software application **16** is shown using various icons. **19** for locating the exact location of the packages/letters and indicates to the consumer the reason why their package or goods are being delayed. Referring now to **FIGURE 3** there is shown various examples of icons **19** which may be used by the software application **16.** These icons **19** may denote the various weather conditions (such as rain, cloud, sunny day, etc.), signs and symbols for locations and many other signs and symbols. Referring now to **FIGURE 4****,** there is shown a captured screenshot of a map view generated by a software feature that denotes the exact address of the area and where the package is currently in real time. The map view is easy and simple to use and locate the location and drawn the address. The address point bar **20** can be zoomed in and zoomed out for the simplicity of the consumer. This feature will give and provides the consumer the ability to see in real-time the location, latitude, longitude, speed, altitude and how far it will take to reach its final destination, based on the service that the consumer selects for method of delivery, such as voice activation. Turning once again to **FIGURE 4****,** a temperature sensor label **16** can be programed for a low, mid and high point **17** to alert the shipper and consignee of the change in temperature **21** which can be monitored through-out the transportation process.

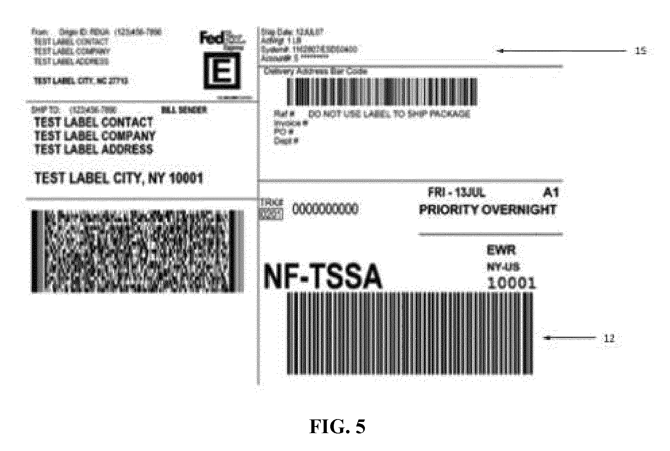

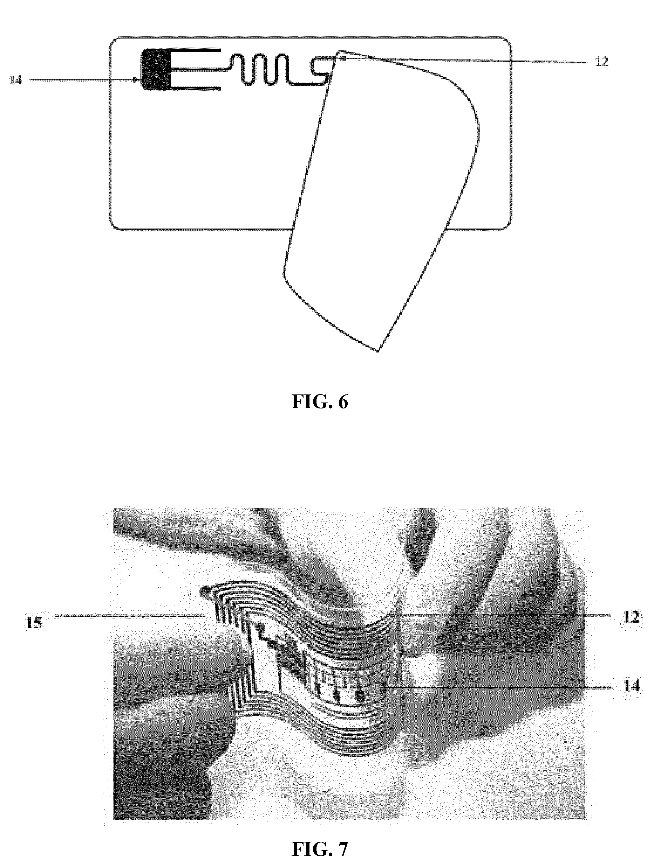

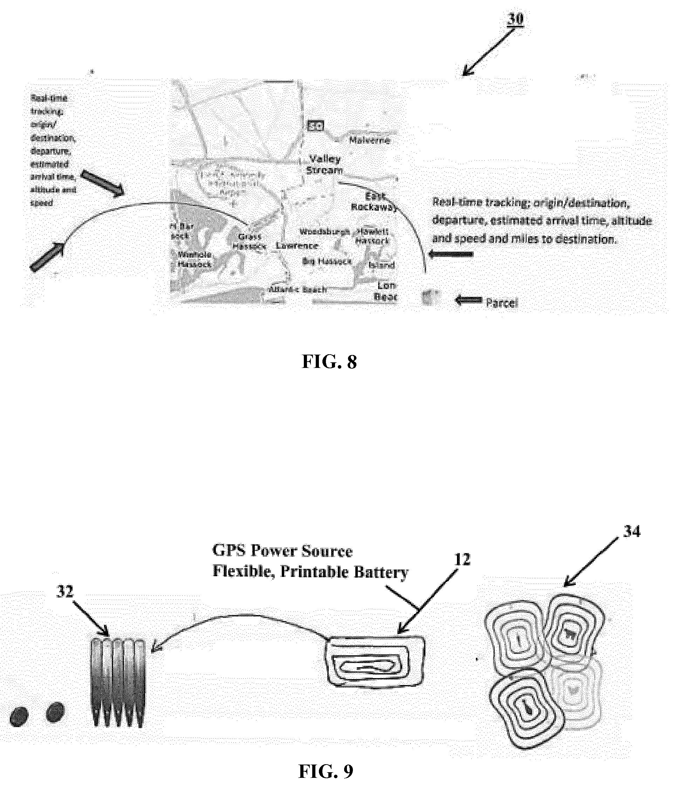

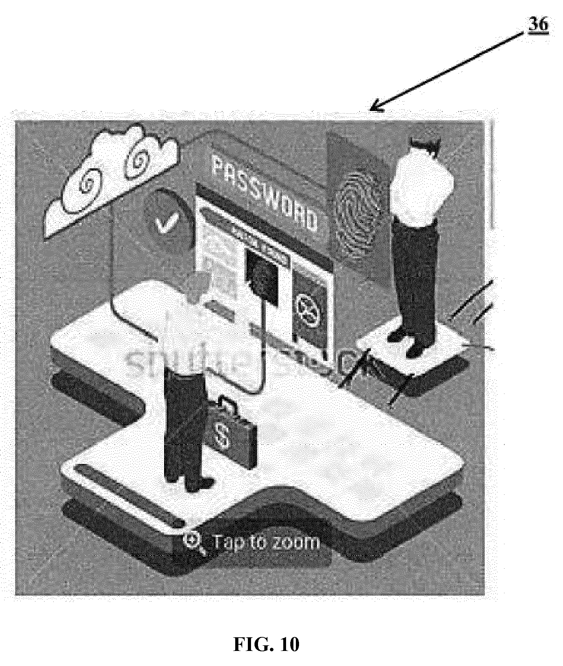

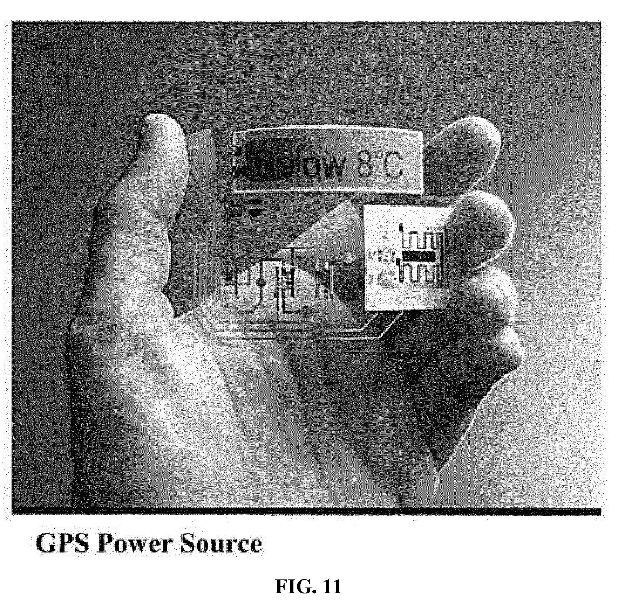

Other preferred embodiments are shown and illustrated in **FIGURES 5** through **10** wherein the GPS shipping barcode **12** is embedded with an RFID label and flexible, printable power source **14,** protected using Tyvek paper **15.** The GPS shipping barcode **12** works with GPS navigation info for identifying and tracking the exact location of the packages/letters. **FIGURE 8** is another graphical view **30** of a captured screenshot using the software application of the present invention for locating the exact location of the packages/letters and temperature sensitive packages. **FIGURE 9** are graphical representations of smart temperature sensor **34** and probe **32** options along with the label like barcode wherein the probes are imbedded for Celsius and Fahrenheit readings and the sensor label programmed for specific food categories. **FIGURE 10** is a graphical figure **36** of the fingerprint technology that will replace current technology for signing for a package. Fingerprint technology will allow the consumer to sign for a package by scanning their fingerprint as proof of receipt, and the name of the consignee will be typed in by the deliverer. **FIGURE 11** is a graphical representation of the **14** flexible, printable power source to be used to power on the real-time **12** GPS Shipping label and Temperature sensor label, will be a smart sticker for time-sensitive perishables or medicines could be printed that might store low, med and high details of its temperature, Dangerous goods and freshness.

In summary and in accordance with the present invention, the below mentioned parts are associated with the GPS shipping barcode label, using with the system for tracking packages and includes:
- Tyvek material or similar weather proof paper used for printing the GPS shipping barcode labels. The Tyvek material or like product is reliable in various weather conditions and is breathable.
- Software for tracking packages, created and written for connecting the tracking label to the barcode with the navigation information using the GPS latitude and longitude technology, for tracking packages.
- Thermal printer can be used to print out a shipping label with the RFID/NFC/Wifi technology behind it. Tyvek paper; wafer like, flexible, printable battery power label material placed under the label or imbedded in the software to activate the barcode.
- Software application for tracking packages; where icons are specified for denoting the locations of letters and/or packages, and/or type of delay of weather.
- Temperature Sensor Label will give the consumer the ability to monitor the internal temperature of the goods being shipped.

Once the tracking number is keyed into the software, the software activates the GPS barcode with RFID/NFC/Wifi label after printed, sending a signal to a GPS satellite and then prints using a thermal printer onto the Tyvek or like paper a label thereby creating a GPS wafer like, flexible, printable battery label imbedded and thin enough to scan through the thermal printer, wherein the label can be printed and used at any business and placed on any product or item.

Furthermore, electronic communication devices such as mobile phones, laptops, desktop, tablets, ipads, watches, etc. can monitor the package in transit to the exact location using the latitude and longitude technology with designed weather icons for weather delays or tracking goods these icons will be utilized by the software application for tracking and identifying locations.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A system for tracking packages capable of tracking and identifying the exact location of the package giving consumers a notification ,comprising:
a wafer like, flexible, printable battery materials on Tyvek and or like materials that can withstand inclement weather;
a GPS barcode printed using a thermal printer onto and imbedded in said Tyvek or like material;
a software application for tracking packages which connects to said label using GPS latitude and longitude technology;
wherein said software application for tracking packages utilizes icons specified for denoting a location of the package, and/or type of delay of weather and
Temperature sensor low, mid and high points.

2. The system according to claim 1, wherein said GPS barcode comprises an RFID/NFC/WiFi label.

3. The system according to claim 1, wherein said Tyvek or like material is weather proof and breathable.

4. The system according to claim 1, wherein said icons denote signs and symbols of various places and weather delays.

5. The system according to claim 1, wherein said software application provides the exact location of the package, providing the precise address of the package location.

6. The system according to claim 1, wherein said GPS longitude and latitude technology is created by entering barcode/GPS tracking information into said software that will activate said GPS/barcode label.

7. Once the information is keyed into the software, a label prints out the label is activated with a power source to be tracked.
